# EUROPÄISCHE PATENTSCHRIFT

(11) **EP 4 096 904 B1**
(45) Veröffentlichungstag und Bekanntmachung des Hinweises auf die Patenterteilung: **20.12.2023**
(21) Anmeldenummer: 20838995.7
(22) Anmeldetag: 21.12.2020
(51) Int. Cl.: B29C 70/16, B29C 53/58, B29C 53/80, B29C 70/32, D04C 3/24, D04C 3/44, D04C 3/48, B29C 70/38, B29C 53/76

(54) **VORRICHTUNG ZUR FERTIGUNG VON FASERVERSTÄRKTEN BAUTEILEN**
APPARATUS FOR MANUFACTURING FIBRE-REINFORCED COMPONENTS
APPAREIL DE FABRICATION DE COMPOSANTS RENFORCÉS PAR FIBRES

(30) Priorität: 31.01.2020 DE 102020201188
(43) Veröffentlichungstag der Anmeldung: 07.12.2022
(73) Patentinhaber: ZF Friedrichshafen AG, 88046 Friedrichshafen (DE)
(72) Erfinder: MÜLLER, Ingolf, 76872 Minfeld (DE); STIEGLITZ, Andre, 49086 Osnabrück (DE)
(74) Vertreter: ZF Friedrichshafen AG
(86) Internationale Anmeldenummer: PCT/EP2020/087364
(87) Internationale Veröffentlichungsnummer: WO 2021/151589

(56) Entgegenhaltungen:
- DE-A1-102017 005 754
- US-A- 6 096 164
- US-B2- 7 467 782

## Beschreibung

Die vorliegende Erfindung betrifft eine Vorrichtung zur Fertigung von faserverstärkten Bauteilen nach einem dreidimensionalen Wickelverfahren, wobei die Vorrichtung zumindest eine rechnergesteuerte Wickelmaschine zur Umwicklung eines auf einer Drehachse angeordneten Faserträgers mit auf zumindest einer Spule bereitgestellten fadenförmigen Endlosfasersträngen mit zumindest einem Wickelmuster umfasst. Weiterhin betrifft die Erfindung gemäß dem Anspruch 13 ein Verfahren zum Erzeugen von Wickelmustern auf einem Faserträger.

Aus der DE 10 2017 222 479 A1 ist eine Vorrichtung zur Fertigung von faserverstärkten Bauteilen nach einem dreidimensionalen Wickelverfahren sowie ein Verfahren zum Erzeugen von Wickelmustern auf einem Faserträger bekannt. So beschreibt die DE 10 2017 222 479 A1 einen Roboter, mit dem ein Faden aus einem Faserkunststoffverbundmaterial auf einen Kern aufgewickelt wird, um das Bauteil auszubilden. Dabei wird der Kern an dem Roboterarm aufgenommen, wobei der Kern während des Umwickelns mit dem Faden von dem Roboterarm geführt wird oder der Kern wird an einer Achse aufgenommen ist, wobei der Faden von einem Roboterarm geführt wird, um den Kern mit dem Faden zu umwickeln.

Die DE 10 2017 005 754 A1 beschreibt eine Anlage zur Fertigung von faserverstärkten Bauteilen nach einem dreidimensionalen Wickelverfahren. Die dreidimensional bewegliche Wickelmaschine ist zentral in einem ringförmigen Käfig positioniert, wobei entlang eines Umfangs des Käfigs mehrere drehbare plattenförmige Trägerelemente zur Bestückung mit einem Faserträger von außen befestigt sind. Die Faserträger sind nach der Bestückung der Wickelmaschine zugewandt. An der Wickelmaschine ist eine Spuleneinheit mit dem Endlosfaserstrang befestigt, wobei ein Kopf der Wickelmaschine zur Führung des Endlosfaserstranges und zur dreidimensionalen Wickelung des Faserträgers mit dem Endlosfaserstrang ausgebildet ist. Die Umwicklung der Faserträger erfolgt dabei sukzessive entsprechen der ringförmigen Anordnung der mit den Faserträgern bestückten Trägerelemente.

Aus der US 6,096,164 A ist eine Vorrichtung gemäß dem Oberbegriff des Anspruches 1 bekannt.

Ausgehend vom vorstehend beschriebenen Stand der Technik ist es nun die Aufgabe der vorliegenden Erfindung, eine Vorrichtung zur Fertigung von faserverstärkten Bauteilen nach einem dreidimensionalen Wickelverfahren sowie ein Verfahren zum Erzeugen von Wickelmustern auf einem Faserträger weiterzubilden, dass diese sich durch eine höhere Effizienz bei der Fertigung von faserverstärkten Bauteilen auszeichnen.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe ausgehend vom Oberbegriff des Anspruchs 13 in Verbindung mit dessen kennzeichnenden Merkmalen. Die hierauf jeweils folgenden, abhängigen Ansprüche geben jeweils vorteilhafte Weiterbildungen der Erfindung wieder.

Gemäß der Erfindung wird eine Vorrichtung zur Fertigung von faserverstärkten Bauteilen nach einem dreidimensionalen Wickelverfahren vorgeschlagen, wobei die Vorrichtung zumindest eine rechnergesteuerte Wickelmaschine zur Umwicklung eines auf einer Drehachse angeordneten Faserträgers mit auf zumindest einer Spule bereitgestellten fadenförmigen Endlosfasersträngen mit zumindest einem Wickelmuster umfasst. Erfindungsgemäß ist vorgesehen, dass die zumindest eine Wickelmaschine als ein mehrere Rotationsachsen aufweisender Roboterarm ausgeführt ist, der zumindest zwei Faserstränge gleichzeitig ablegt, wobei der zumindest eine Roboterarm zur gleichzeitigen Ablage der zumindest zwei Faserstränge verteilt auf mindestens zwei auf jeweils einer separaten Drehachse angeordneten Faserträger und/oder zur gleichzeitigen Ablage der zumindest zwei Faserstränge auf nur einem auf einer separaten Drehachse angeordneten Faserträger eingerichtet ist. Die zumindest eine Wickelmaschine ist als ein sechs Rotationsachsen aufweisender Roboterarm ausgeführt. Insbesondere bildet die jeweilige Drehachse eine siebte Achse der Vorrichtung, um die der jeweilige Faserträger bei der Fadenablage rotiert. Hierdurch lässt sich die Anzahl gleichzeitig zu fertigender Bauteile erhöhen, bzw. die Fertigungsdauer eines einzelnen Bauteils reduzieren. Insbesondere durch eine Kombination von paralleler Bewicklung von zwei oder mehr Faserträgern bei gleichzeitiger parallelisierter Ablage von zwei oder mehr Fasersträngen auf dem jeweiligen Faserträger lässt sich eine Vervielfachung der Fertigungsgeschwindigkeit erreichen. Es findet eine mehrdimensionale Parallelisierung des Fertigungsprozesses statt, wodurch die Fertigungsgeschwindigkeit als Produkt aus der Anzahl M Faserträger und der Anzahl N abzulegender Faserstränge erhöht werden kann.

Dabei kann die Vorrichtung zumindest eine Einrichtung zur Aufrechterhaltung einer vorgebbaren Faserstrangspannung unabhängig von der Zuführrichtung des jeweiligen Faserstranges zwischen Spule und Faserträger aufweisen. Mittels der Einrichtung kann sowohl bei einem Abspulen, d.h. dem Zuführen des jeweiligen Faserstranges, als auch einem Zurückspulen, d.h. dem Wiederaufwickeln eines überschüssig abgezogenen Faserstranges, die vorgebbare Faserstrangspannung des jeweiligen Faserstranges aufrechterhalten werden.

Hierfür kann die zumindest eine Einrichtung zumindest einen elektronisch geregelten Synchronmotor umfassen, welcher die Spule antreibt. Synchronmotoren eignen sich vorteilhaft für Anwendungen, bei denen eine belastungsunabhängige, stabile Drehzahl gefordert ist, wie dies bei der Aufrechterhaltung der Faserstrangspannung der Fall ist. Zudem ermöglicht ein Synchronmotor eine kompakte und effiziente Ausgestaltung der Einrichtung zur Aufrechterhaltung der Faserstrangspannung, was sich im Gesamtgewicht der zumindest einen Einrichtung wiederspiegelt. Jede Spule wird von einem elektronisch geregelten Synchronmotor angetrieben.

Insbesondere kann die zumindest eine Einrichtung zumindest eine Sensoreinheit zur Detektion der Faserstrangspannung und zumindest eine Recheneinheit zur Ansteuerung des zumindest einen Synchronmotors in Abhängigkeit von der detektierten Faserstrangspannung umfassen. Die zumindest eine Sensoreinheit arbeitet bevorzugt berührungslos, um den Einfluss auf die zu detektierende Faserstrangspannung zu minimieren.

Gemäß einer bevorzugten Ausführungsform kann die zumindest eine Einrichtung zur Aufrechterhaltung der Faserstrangspannung mit einer Aufnahmeeinheit zur Aufnahme zumindest einer Spule verbunden sein. Auf der Aufnahmeeinheit kann zumindest eine den abzuwickelnden Faserstrang tragende Spule angeordnet sein. Bevorzugt ist die Spule kraftschlüssig mit dem Synchronmotor verbunden. Besonders bevorzugt können zwei oder mehr Spulen auf der Aufnahmeeinheit angeordnet sein, die jeweils kraftschlüssig mit dem jeweiligen antreibenden Synchronmotor verbunden sind. Dadurch lässt sich die Anzahl gleichzeitig zu fertigender faserverstärkter Bauteile entsprechend erhöhen. Die Ansteuerung der Synchronmotoren an der Aufnahmeeinheit kann durch eine gemeinsame Recheneinheit erfolgen. Alternativ kann jeder der Synchronmotoren durch eine separate Recheneinheit angesteuert werden.

Insbesondere kann die zumindest eine Spule beabstandet zu dem zumindest einen Roboterarm angeordnet sein. Diese Anordnung hat den Vorteil, dass die zumindest eine räumlich zu dem Roboterarm beabstandet angeordnete Spule keine Zusatzmasse bildet, die von dem Roboterarm zu tragen ist. Bei der externen Materialbevorratung trägt der Roboterarm lediglich eine Ablageeinheit, mit welcher der Faserstrang beim Umwickeln und Ablegen auf dem Faserträger geführt wird. Mit der zumindest einen Spule ist entsprechend auch die zumindest eine Einrichtung zur Aufrechterhaltung der Faserstrangspannung mit der Aufnahmeeinheit zur Aufnahme der zumindest einen Spule beabstandet zu dem Roboterarm angeordnet.

Gemäß einer alternativen Ausführung kann die zumindest eine Spule an dem zumindest einen Roboterarm angeordnet sein. Diese Anordnung hat den Vorteil, dass die freie Fadenlänge, d.h. der Abstand zwischen Spule und Faserträger, gering gehalten wird und höhere Bewegungsgeschwindigkeiten des Roboterarmes ermöglicht werden. Hierbei werden sowohl die zumindest eine Einrichtung zur Aufrechterhaltung der Faserstrangspannung als auch die zumindest eine Spule direkt am Roboterkopf, d.h. dem freien Ende des Roboterarmes, mitgeführt.

Gemäß einer weiteren alternativen Ausführung kann die Drehachse, auf welcher der Faserträger angeordnet ist, an dem Roboterarm angeordnet sein. Gemäß dieser Anordnung ist eine externe Materialbevorratung vorgesehen, bei der neben der zumindest einen Spule entsprechend auch die zumindest eine Einrichtung zur Aufrechterhaltung der Faserstrangspannung mit der Aufnahmeeinheit räumlich beabstandet zu dem Roboterarm angeordnet sind.

Insbesondere kann zur im Wesentlichen reibungsarmen Zuführung des jeweiligen Faserstranges zumindest ein Fadenauge an dem zumindest einen Roboterarm angeordnet sein. Dies ist bei der Zuführung des Faserstranges von Bedeutung, da es sich bei dem Faserstrang um ein vorimprägniertes fadenförmiges Halbzeug, beispielsweise ein Towpreg-Halbzeug, Yarnpreg-Halbzeug, Uni-Tape-Halbzeug oder Pre-Preg-Halbzeug, handelt. Vorimprägniertes Halbezeug kommt zum Einsatz, weil sich damit im Vergleich zum klassischen Nasswickelverfahren um bis zu einem Faktor 10 höhere Wickelgeschwindigkeiten darstellen lassen. Aufgrund der Klebrigkeit des vorimprägnierten Faserstranges und der Verwendung des dreidimensionalen Wickelverfahrens sowie der Rotation des Bauteils um eine Drehachse können gekrümmte Wickelbahnen außerhalb der geodätischen Linien des Bauteils erzeugt werden.

Gemäß einer bevorzugten Weiterbildung können zumindest zwei Faserträger auf separaten Drehachsen im Wesentlichen parallel zueinander angeordnet sein. Hierfür kann ein Drehgestell vorgesehen sein, welches zumindest zwei angetriebene Drehachsen umfasst, auf denen jeweils ein Faserträger angeordnet wird. Hierbei können mehrere parallele, gleichartig gesteuerte Drehachsen betrieben werden, an denen jeweils ein Faserträger angeordnet ist und somit um seine Wickelachse rotieren kann. Alle parallelen Drehachsen rotieren synchron oder nahezu synchron, so dass mit einem Steuerbefehl alle Drehachsen an dem Drehgestell gleichzeitig angesprochen werden. Die Aufnahmeeinheit, welche die Spulen trägt, weist dabei zur Ansteuerung des jeweiligen Synchronmotors jeweils eine Einrichtung zur Aufrechterhaltung der Faserstrangspannung auf.

Unter der Voraussetzung, dass sich ein ruhiger Gleichlauf der Wickelachsen einstellt und der Einfluss äußerer Störungen, wie beispielsweise Geometrieabweichungen der zu fertigenden Bauteile oder gleicher Abspulzustand, d.h. Durchmesser der Spulen, etc., begrenzt wird, kann eine vereinfachte Anordnung umgesetzt werden, bei welcher die die Spulen tragende Aufnahmeeinheit mit nur einer Einrichtung zur Aufrechterhaltung der Faserstrangspannung für die Spulen verwendet wird. Die Synchronmotoren können dabei von genau einer Einrichtung zur Aufrechterhaltung der Faserstrangspannung geregelt werden.

Besonders vorteilhaft ist eine Ausgestaltung der Vorrichtung zur Fertigung von faserverstärkten Bauteilen mit einer Kombination aus Spulenanordnung und Faserträgeranordnung. So kann die Spulenanordnung derart vorgesehen sein, dass auf einer Aufnahmeeinheit mehrere Spulen matrixartig angeordnet sind, d.h. zumindest zwei Spulen in einer Reihe nebeneinander und zumindest zwei Spulen in einer Spalte untereinander, wobei von jeweils in einer Reihe befindlichen Spulen Faserstränge parallelisiert abgezogen werden. Die Faserträgeranordnung kann zumindest zwei zu umwickelnde Faserträger aufweisen, die auf zumindest zwei parallel zueinander angeordneten Drehachsen angeordnet sind. Dem jeweiligen Faserträger werden von den jeweiligen in einer Reihe angeordneten Spulen die jeweils parallelisierten Faserstränge zugeführt. Hierdurch lässt sich eine mehrdimensionale Parallelisierung des Fertigungsprozesses erreichen, durch welchen die Fertigungsgeschwindigkeit in der Dimension des Produkts von Anzahl Faserträger und Anzahl Fasersträngen erhöht werden kann.

Insbesondere können zwei Roboterarme einander gegenüberliegend angeordnet sein, die zur inversen Ablage jeweils zumindest eines Faserstranges auf einem zwischen den Roboterarmen auf einer Drehachse angeordneten Faserträger eingerichtet sind. Unter inverser Ablage wird eine gleichzeitige spiegelbildliche bzw. gegensinnige Ablage eines jeweiligen Faserstranges auf dem einen auf der Drehachse angeordneten Faserträger bezüglich der Symmetrieachse des Faserträgers verstanden. Dabei sollte die Symmetrieachse des Faserträgers mit der Drehachse zusammenfallen. Zur Effizienzsteigerung können die beiden, einander gegenüberliegend angeordneten, Roboterarme zur inversen Ablage von jeweils zwei oder mehr Fasersträngen auf dem zwischen den Roboterarmen auf der Drehachse angeordneten Faserträger eingerichtet sein.

Weiterhin ist es denkbar, dass zwei Faserträger auf einer gemeinsamen Drehachse nebeneinander angeordnet sein können. Hierbei können auf zwei zwischen den Roboterarmen auf einer Drehachse angeordneten Faserträgern verteilt zumindest jeweils zwei parallelisierte Faserstränge abgelegt werden.

Weiterhin wird die eingangs gestellte Aufgabe durch ein Verfahren mit den Merkmalen des Anspruchs 13 gelöst.

Gemäß dem Anspruch 13 wird ein Verfahren zum Erzeugen von Wickelmustern auf einem Faserträger mit einer Vorrichtung nach einem der Ansprüche 1 bis 12, vorgeschlagen, bei dem mit der Vorrichtung ein geradzahliges Vielfaches parallelisierter Faserstränge, mindestens jedoch zwei Faserstränge, auf zumindest einen Faserträger aufgewickelt werden.

Dazu kann vorgesehen sein, dass eine vorgebbare Faserstrangspannung während des Wickelprozesses unabhängig von der Faserzuführrichtung eines Faserstranges zwischen Spule und Faserträger aufrechterhalten wird. Mittels der Einrichtung zur Aufrechterhaltung der Faserstrangspannung kann sowohl bei einem Abspulen, d.h. dem Zuführen des jeweiligen Faserstranges, als auch einem Zurückspulen, d.h. dem Wiederaufwickeln eines überschüssig abgezogenen Faserstranges, die vorgebbare Faserstrangspannung des jeweiligen Faserstranges aufrechterhalten werden. Hierfür kann die zumindest eine Einrichtung zumindest einen elektronisch geregelten Synchronmotor umfassen, welcher eine Spule antreibt, von der der Faserstrang abgezogen wird. Zur Ansteuerung des zumindest einen Synchronmotors wird mittels einer Sensoreinheit die Faserstrangspannung detektiert und von einer Recheneinheit der zumindest einen Einrichtung ausgewertet, um in Abhängigkeit von der Faserstrangspannung den Synchronmotor anzusteuern.

Insbesondere können zwei Rotationsachsen des zumindest einen mehrere Rotationsachsen aufweisenden Roboterarms bei einer parallelisierten Ablage von Fasersträngen verteilt auf parallel zueinander angeordneten Faserträgern derart angesteuert werden, dass diese während des gesamten Wickelprozesses mit einem konstanten Winkel betrieben werden. Hierbei werden von auf einer Aufnahmeeinheit parallel zueinander angeordneten Spulen zwei oder mehr Faserstränge abgezogen, mit denen die parallel zueinander angeordneten Faserträger umwickelt werden. Um zu gewährleisten, dass alle abgezogenen Faserstränge jeweils exakt parallel laufen, die gleiche Länge bzw. den gleichen Abstand zwischen dem Faserträger und der jeweiligen Spule aufweisen und am gleichen Punkt der Faserträger ankommen, wird die Kinematik des Roboterarms eingeschränkt. Insbesondere weist der zumindest eine Roboterarm sechs Rotationsachsen auf.

Mittels der erfindungsgemäßen Vorrichtung sowie des erfindungsgemäßen Verfahrens lassen sich insbesondere faserverstärkte Bauteile für Fahrwerke von Fahrzeugen fertigen. Insbesondere Bauteile mit klarem, möglichst konstanten Lastfluss lassen sich durch die Vorrichtung bzw. das Verfahren fertigen, bei denen sich der Lastfluss auf wenige dominante Lastrichtungen beschränkt. Beispielsweise sind alle Arten von Mehrpunktlenkern, Zweipunktlenker, Dreipunktlenker, Vierpunktlenker oder Fünfpunktlenker, mit diesem Verfahren darstellbar. Es entstehen Funktionsbauteile von geringster Masse mit gleichzeitig hohen Festigkeits- und Steifigkeitswerten.

Vorteilhafte Ausführungsformen der Erfindung, die nachfolgend erläutert werden, sind in den Zeichnungen dargestellt. Es zeigt:
- Fig. 1a - 1e: schematische Ansichten von als Mehrpunktlenker ausgeführten faserverstärkten Bauteilen;
- Fig. 2: schematisch eine Vorrichtung zur Fertigung von faserverstärkten Bauteilen nach einem dreidimensionalen Wickelverfahren;
- Fig. 3: schematisch eine Vorrichtung nach Fig. 2 gemäß einer weiteren Ausführungsform;
- Fig. 4: schematisch eine Vorrichtung nach Fig. 2 gemäß einer dritten Ausführungsform;
- Fig. 5: schematisch eine Vorrichtung zur parallelisierten Ablage zweier Faserstränge auf zwei Faserträgern;
- Fig. 6: schematisch eine Weiterbildung der Vorrichtung gemäß Fig. 5;
- Fig. 7: schematisch eine Vorrichtung zur parallelisierten Ablage zweier Faserstränge auf einem Faserträger; und
- Fig. 8: schematisch eine Vorrichtung zur parallelisierten Ablage zweier Faserstränge auf einem Faserträger gemäß einer weiteren Ausführungsform.

Nachfolgend werden für identische oder funktionsgleiche Bauteile oder Komponenten die gleichen Bezugszeichen verwendet.

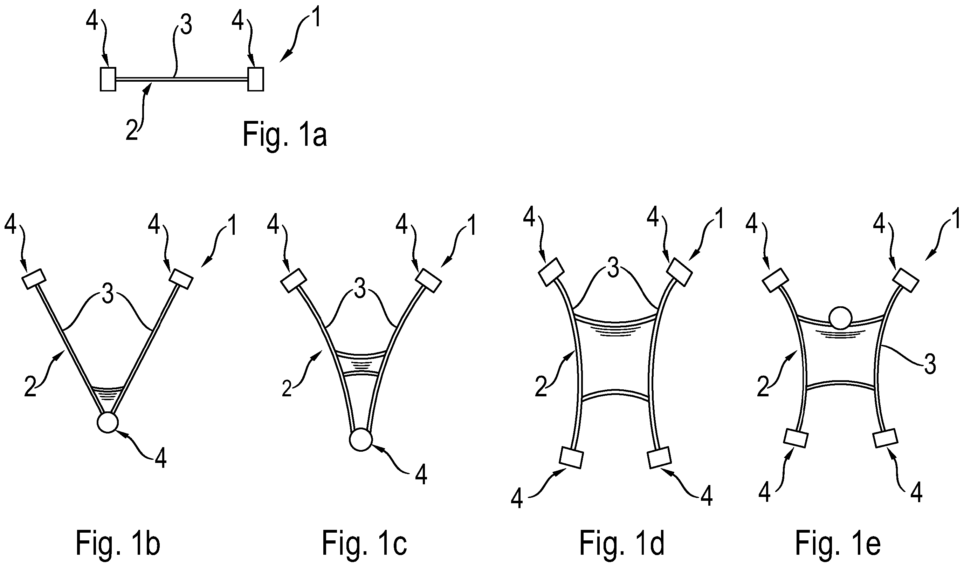

In den Fig. 1a bis 1e sind schematische Ansichten von als Mehrpunktlenker ausgeführten faserverstärkten Bauteilen 1 dargestellt. So zeigt Fig. 1a ein als Zweipunktlenker ausgeführtes Fahrwerkstrukturbauteil 1. Das Fahrwerkstrukturbauteil 1 umfasst einen Körper 2, der zumindest zwei Lasteinleitungsbereiche 4 aufweist, die durch eine Verbindungsstruktur 3 miteinander verbunden sind. Die Verbindungsstruktur 3 des Körpers 2 kann insbesondere als Hohlprofil ausgeführt sein. Der Körper 2 bestimmt im Wesentlichen die Grundform des Fahrzeugstrukturbauteils 1. In den Fig. 1b und 1c sind beispielhaft zwei Varianten eines als Dreipunktlenkers ausgeführten Fahrwerkstrukturbauteils 1 dargestellt. In den Fig. 1d und 1e ist beispielhaft ein als Vierpunktlenker bzw. ein als Fünfpunktlenker ausgeführtes Fahrwerkstrukturbauteil 1 dargestellt. Als Mehrpunktlenker ausgeführte Fahrwerkstrukturbauteile 1 können kinematische Punkte in einem Fahrwerk und/oder in einer Radaufhängung verbinden und Bewegungen und/oder Kräfte übertragen. Hierbei kann die Verbindung des Mehrpunktlenkers mit weiteren Bestandteilen des Fahrwerks mittels Gelenken realisiert sein, die in den Lasteinleitungsbereichen 4 angeordnet sind. Diese Bauteile 1 weisen aufgrund der Symmetrie ihrer Gestalt sowie der Anordnung der Lasteinleitungsbereiche 4 einen eindeutigen, im Wesentlichen konstanten Lastfluss auf, der sich auf wenige dominante Lastrichtungen beschränkt. Die Fertigung solcher Bauteile 1 als faserverstärkte Bauteile mittels eines dreidimensionalen Wickelverfahrens ermöglicht es, Funktionsbauteile von geringster Masse mit gleichzeitig hohen Festigkeits- und Steifigkeitswerten herzustellen.

Nachfolgend werden verschiedene Ausführungsformen einer Vorrichtung 10 zur Fertigung von solchen faserverstärkten Bauteilen 1 nach einem dreidimensionalen Wickelverfahren sowie ein Verfahren zum Erzeugen von Wickelmustern auf einem Faserträger 11 mit einer solchen Vorrichtung 10 beschrieben.

In Fig. 1 ist schematisch eine Vorrichtung 10 zur Fertigung von faserverstärkten Bauteilen 1 nach einem dreidimensionalen Wickelverfahren dargestellt. Der Faserträger 11 bildet ein Kernelement des Bauteils 1, wobei der Faserträger 11 aus einem Schaummaterial besteht, der mit zumindest einem fadenförmigen Endlosfaserstrang 12, nachfolgend als Faserstrang bezeichnet, aus einem Faserkunststoffverbundmaterial umwickelt wird. Der Faserträger 11 gibt dabei die im Wesentlichen die Kontur des herzustellenden Bauteils vor, ohne jedoch eine tragende Funktion auszuüben. Die Darstellung zeigt den Faserträger 11 mit daran bereits angeordneten Gelenkelementen in den Lasteinleitungsbereichen 4. Das Ablegen erfolgt in der Form von einem oder mehreren unterschiedlichen Wickelmustern, wobei jedem Wickelmustert eine bestimmte Aufgabe zugeordnet, eine oder mehrere mechanische Eigenschaften des Bauteils 1 zu beeinflussen.

Die Vorrichtung 10 umfasst zumindest eine rechnergesteuerte Wickelmaschine, die als ein sechs Rotationsachsen aufweisender Roboterarm 13 ausgeführt ist. Zur Ansteuerung des zumindest einen Roboterarmes 13 ist eine Steuereinheit 14 vorgesehen, die durch eine Signalleitung oder ein Bussystem 15 mit dem Roboterarm 13 kommuniziert. Auf einer angetriebenen Drehachse 16 eines Drehgestells 17 ist der Faserträger 11 angeordnet, auf den der zumindest eine Faserstrang 12 mit zumindest einem durch die Steuereinheit 14 vorgebbaren Wickelmuster aufgewickelt wird. Der Antrieb der Drehachse 16 kann ebenfalls von der Steuereinheit 14 über das Bussystem 15 angesteuert werden. Die Drehachse 16 des Drehgestells bildet eine siebte Rotationsachse der Vorrichtung 10. Der zumindest eine Faserstrang 12 wird auf zumindest einer Spule 18 bereitgestellt. Die Spule 18 ist räumlich beabstandet zu dem Roboterarm 13 angeordnet.

Die Vorrichtung 10 umfasst weiterhin zumindest eine Einrichtung 19 zur Aufrechterhaltung einer vorgebbaren Faserstrangspannung. Die jeweilige Einrichtung 19 umfasst einen Antriebsmotor, eine Recheneinheit 21 sowie zumindest eine Sensoreinheit 22 zur Detektion der Faserstrangspannung. Die Spule 18 ist drehfest auf einer Achse 23 angeordnet, die von dem Antriebsmotor angetrieben wird, der als elektronisch geregelter Synchronmotor 20 ausgeführt ist. Der von der Spule 18 abgezogene Faserstrang 12 wird im Wesentlichen reibungsfrei den an dem Roboterarm 13 angeordneten Fadenaugen 24 dem Faserträger 11 zugeführt. Zur Überwachung der Faserstrangspannung ist zumindest eine Sensoreinheit 22 entlang des freien Weges des zumindest einen Faserstrangs 12 zwischen dem Abspulpunkt auf der Spule 18 und dem Ablagepunkt auf dem Faserträger 11.

Die Recheneinheit 21 ist zur Auswertung der Signale der zumindest einen Sensoreinheit 22 sowie zur Ansteuerung des zumindest einen Synchronmotors 20 in Abhängigkeit von der detektierten Faserstrangspannung eingerichtet. Die Ansteuerung des zumindest einen Synchronmotors 20 durch die Recheneinheit 21 ermöglicht die Aufrechterhaltung der vorgebbaren Faserstrangspannung. Dies ist notwendig, um eine durch die Bewegung des Roboterarmes 13 hervorgerufene Längung oder Verkürzung des Faserstrangs 12 zu vermeiden. Hierfür kann die Steuereinheit 14 des Roboterarmes 13 mit der Recheneinheit 21 durch das Bussystem 15 verbunden sein, um das Bewegungsprofil des sechs Rotationsachsen aufweisenden Roboterarms 13 an die Recheneinheit 21 zu übertragen. Damit kann die Präzision, mit der die Faserstrangspannung durch die Ansteuerung des Synchronmotors 20 aufrechterhalten wird, erhöht werden. Die von dem Synchronmotor 20 angetriebene Spule 18 lässt sich derart betreiben, dass wechselweise ein Abspulen sowie ein Zurückspulen des Faserstranges 12 durch eine Drehrichtungsänderung möglich ist.

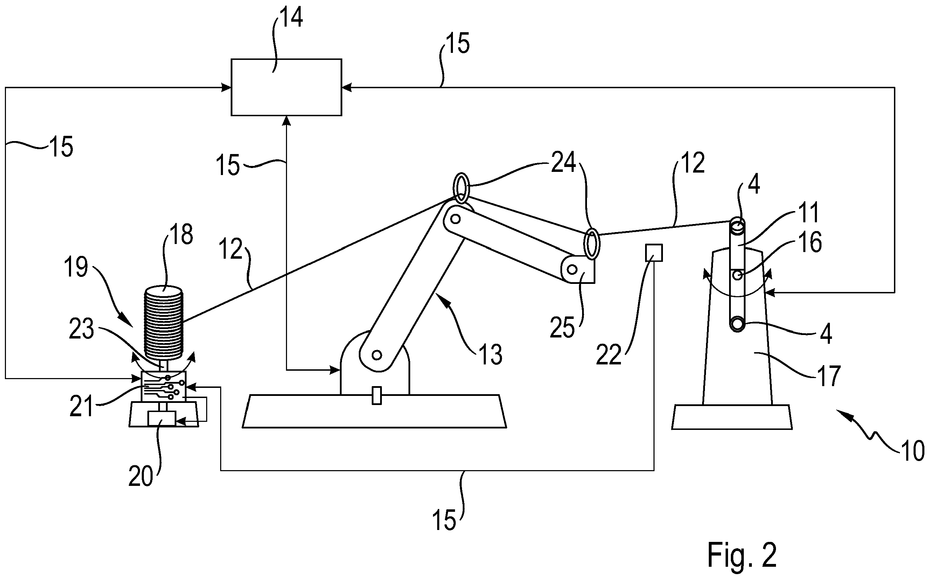

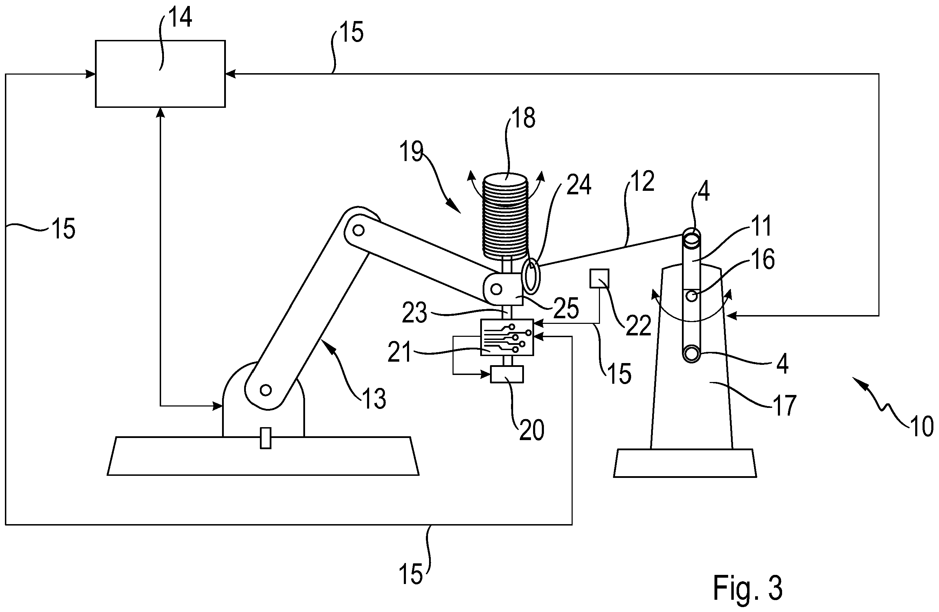

Die Darstellung in Fig. 3 zeigt schematisch die Vorrichtung 10 nach Fig. 2 gemäß einer weiteren Ausführungsform. Diese Ausführungsform der Vorrichtung 10 unterscheidet sich von der zuvor beschriebenen durch die abweichende Positionierung der zumindest einen Spule 18 und der Einrichtung 19 zur Aufrechterhaltung der vorgebbaren Faserstrangspannung des zumindest einen Faserstranges 12. Die Spule 18 und die Einrichtung 19 sind am Kopf 25 des Roboterarms 13 angeordnet und werden von diesem mitgeführt. Der Vorteil dieser Anordnung besteht in der kürzeren freien Weglänge des Faserstranges 12, wodurch die Ansteuerung des Synchronmotors 20 vereinfacht wird. Zudem lässt sich dadurch die Bewegungsgeschwindigkeit des Roboterarmes 13 erhöhen.

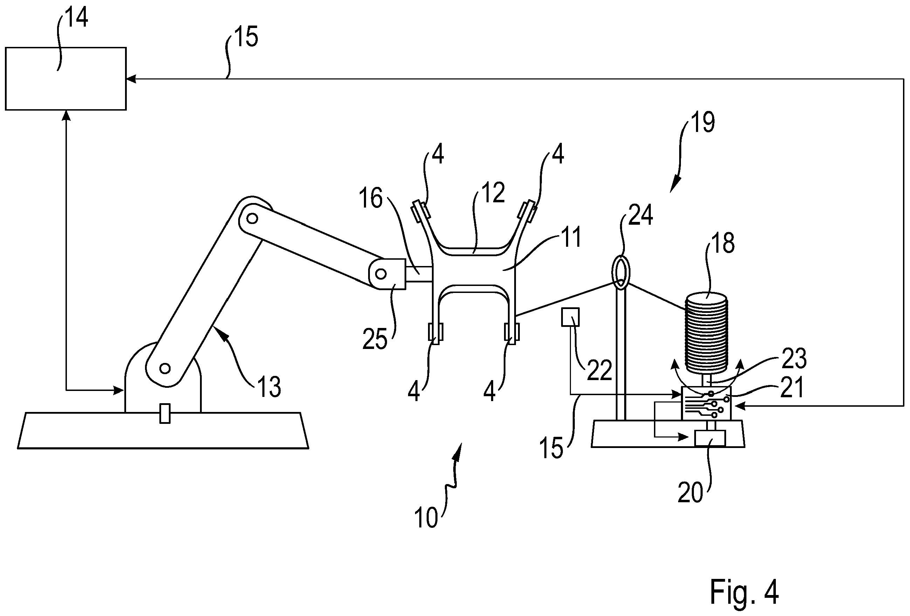

In Fig. 4 ist schematisch die Vorrichtung 10 nach Fig. 2 gemäß einer dritten Ausführungsform dargestellt. Hierbei ist im Unterschied zu den vorangehend beschriebenen Ausführungsformen der Vorrichtung 10 die Drehachse 16, auf welcher der zumindest eine Faserträger 12 drehbar angeordnet ist, am Kopf 25 des Roboterarmes 13 angeordnet. Die Spule 18 sowie die Einrichtung 19 zur Aufrechterhaltung der Faserstrangspannung sind räumlich beabstandet zu dem Roboterarm 13 angeordnet.

Während bei den Ausführungsformen gemäß den Fig. 2 und 3 der zumindest eine Faserstrang 12 durch den Roboterarm 13 geführt wird und der zumindest eine zu umwickelnde Faserträger 11 auf zumindest einer angetriebenen Drehachse 16 des Drehgestells angeordnet ist, wird der Faserträger 11 gemäß dieser dritten in Fig. 4 dargestellten Ausführungsform von dem Roboterarm 13 geführt.

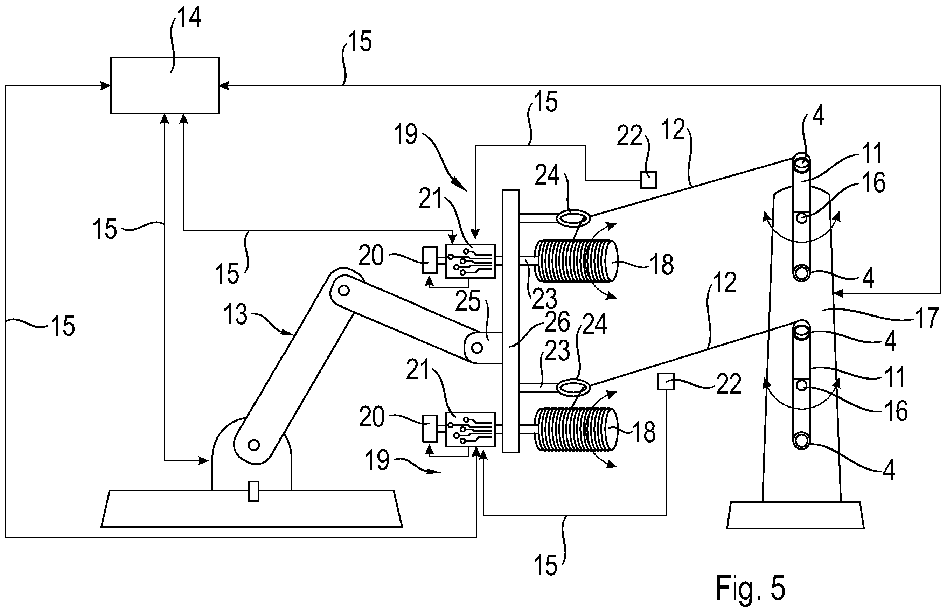

Fig. 5 stellt schematisch die Vorrichtung 10 zur parallelisierten Ablage zweier Faserstränge 12 auf zwei Faserträgern 11 dar. Durch eine M-fach parallelisierte Faserstrangablage auf mehreren parallel ausgerichteten Faserträgern 11 wird eine Effizienzsteigerung des Verfahrens zum Erzeugen von Wickelmustern auf den Faserträgern 11 und damit der Fertigung der Bauteile 1 erreicht. Dabei basiert die Vorrichtung 10 auf der anhand der Fig. 3 beschriebenen Ausführungsform. An dem Kopf 25 des Roboterarmes 13 ist eine Aufnahmeeinheit 26 zur Aufnahme von zwei oder mehr Spulen 18 vertikal übereinander angeordnet. Dabei sind entsprechend der Anzahl der Spulen 18 zwei oder mehr Einrichtungen 19 zur Aufrechterhaltung der Faserstrangspannung, wie sie weiter oben bereits beschrieben wurden, mit der Aufnahmeeinheit 26 verbunden. Jede Einrichtung 19 dient dazu, die Faserstrangspannung des jeweiligen von einer Spule 18 abgezogenen Faserstrangs 12 aufrechtzuerhalten. Das Drehgestell 17 umfasst entsprechend der Anzahl der spaltenförmig übereinander angeordneten Spulen 18 zwei oder mehr angetriebene Drehachsen 16, auf denen jeweils ein Faserträger 11 angeordnet ist. Dabei steuert die Steuereinheit 14 die Antriebe der Drehachsen 16, welche die siebte Rotationsachse der Vorrichtung 10 bilden, in der Weise an, dass die zueinander parallelen Drehachsen 16 des Drehgestells gleichartig betrieben werden. Die Recheneinheiten 21 der Einrichtungen 19 steuern die die Achsen 23 antreibenden Synchronmotoren 20 in der Weise an, dass der Faserstrangzuführvorgang von den parallel von der Aufnahmeeinheit 26 aufgenommenen Spulen 18 ebenfalls gleichartig verläuft. Bevorzugt können alle zueinander parallel orientierten Drehachsen 16 bzw. Achsen 23 synchron rotieren, so dass mit einem Steuerbefehl alle Drehachsen 16 bzw. Achsen 23 gleichzeitig angesprochen werden können.

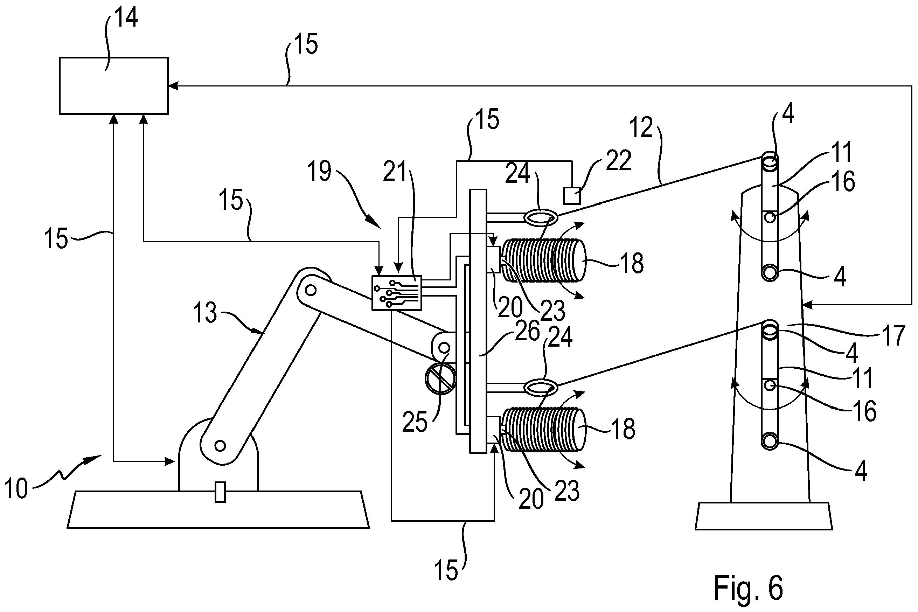

Die Darstellung in Fig. 6 zeigt schematisch eine Weiterbildung der Vorrichtung 10 gemäß Fig. 5. Dabei kann eine Vereinfachung des Aufbaus der Vorrichtung 10 erreicht werden, wenn bei der Faserstrangzuführung durch eine geeignete Ansteuerung ein ruhiger Gleichlauf der Drehachsen 16 erzeugt werden kann. Zudem sollte bei der Realisierung dieser Weiterbildung der Vorrichtung 10 eine Begrenzung des Einflusses durch äußere Störungen, wie beispielsweise Geometrieabweichungen, im Wesentlichen gleicher Abspulzustand, d.h. im Wesentlichen gleicher Durchmesser der Spulen 18, und dergleichen, erreicht werden. Unter Berücksichtigung zumindest einer dieser Voraussetzungen kann eine vereinfachte Ausgestaltung der Vorrichtung 10 darin bestehen, dass diese mit nur einer Einrichtung 19 jedoch zwei oder mehr Synchronmotoren 20 zum Antreiben der Spulen 18 betrieben werden kann.

Mit den in den Fig. 5 und 6 dargestellten Vorrichtungen 10 ist es möglich, eine parallele Fertigung mehrerer Bauteile 1 der Anzahl M mit nur einem Roboterarm 13 in der gleichen Gesamtfertigungszeit durchzuführen. Die Fertigungszeit pro Bauteil 1 kann auf den M-ten Teil der Gesamtzeit reduziert werden.

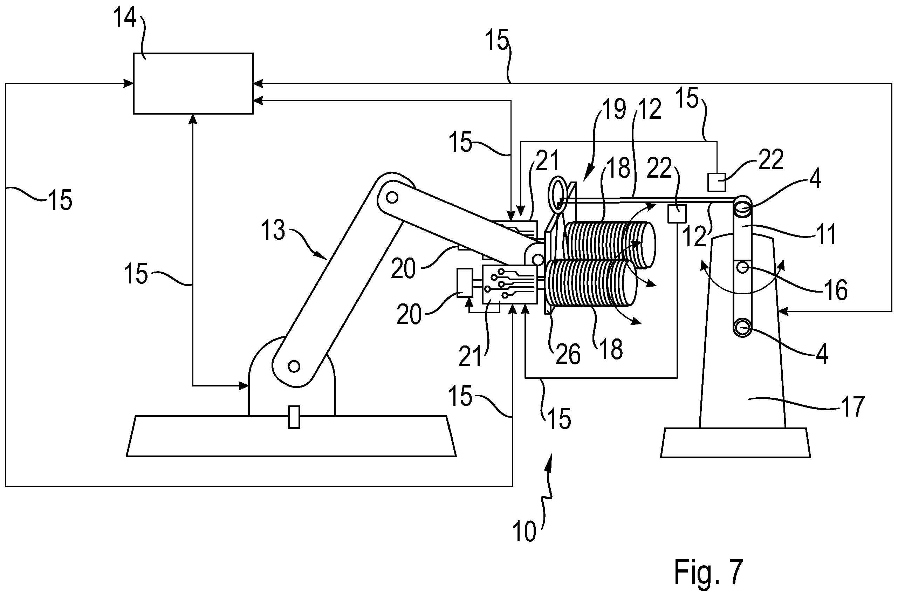

Fig. 7 zeigt schematisch die Vorrichtung 10 in einer Ausführungsform, die zur parallelisierten Ablage zweier Faserstränge 12 auf einem einzelnen Faserträger 11 eingerichtet ist. Die Aufnahmeeinheit 26 trägt zumindest zwei in einer horizontalen Reihe nebeneinander angeordnete Spulen 18. Dabei erfolgt die Ablage der Faserstränge 12 entsprechend des jeweils zu erzeugenden Wickelmusters auf nahezu parallelen Ablagebahnen, d.h. mit geringem räumlichen Versatz der einzelnen Faserstränge 12. Das gesamte Bauteil 1 setzt sich üblicherweise aus verschiedenen Wickelmustern zusammen, welche wiederum aus mehreren parallelen Faserstrangbahnen (Wickelorbits) aufgebaut sind. Damit eignet sich das grundlegende Konstruktionsprinzip dieser dreidimensionalen gewickelten Bauteile 1 sehr gut für eine Parallelisierung der Faserstränge 12. Hierbei können zwei oder mehr Faserstränge 12 von einer korrespondierenden Anzahl von Einrichtungen 19 zur Aufrechterhaltung der Faserstrangspannung mit geringem räumlichen Abstand parallel auf einem einzelnen Fadenträger 11 abgelegt werden. Damit kann ein jeweiliges Wickelmuster mit x parallelen Fasersträngen 12 durch x/N Wickelorbits dargestellt werden.

Insbesondere lässt sich durch eine Kombination der in den Fig. 5 bzw. 6 dargestellten Ausführungsformen mit der in Fig. 7 dargestellten Ausführungsform eine mehrdimensionale Parallelisierung des Fertigungsprozesses erreichen, durch welchen die Fertigungsgeschwindigkeit in der Dimension des Produkts von Anzahl Faserträger 11 und Anzahl Fasersträngen 12 erhöht werden kann.

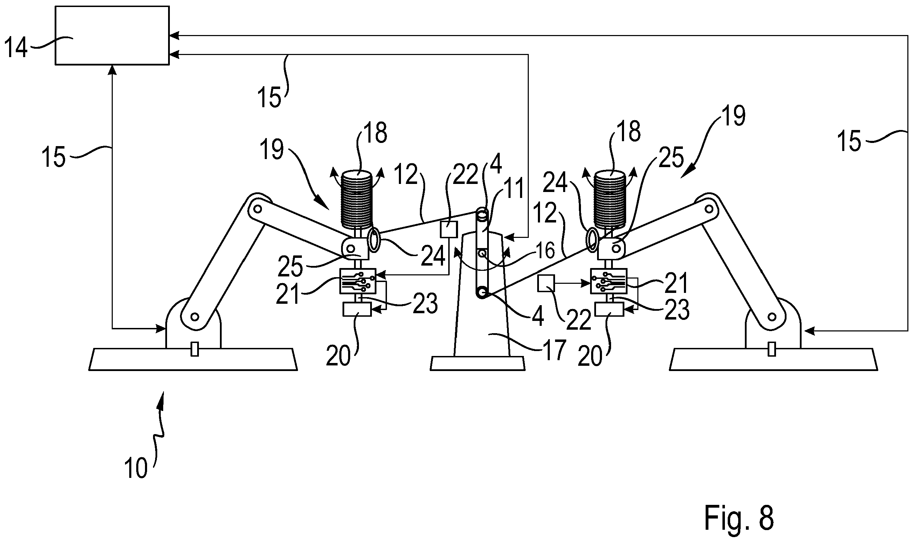

Fig. 8 stellt schematisch eine Vorrichtung 10 zur parallelisierten Ablage zweier Faserstränge 12 auf einem einzelnen Faserträger 11 gemäß einer weiteren Ausführungsform dar. Dabei sind zwei Roboterarme 13 vorgesehen, welche gleichzeitig zumindest einen Faserstrang 12 auf den einen an dem Drehgestell 17 angeordneten Faserträger 11 aufwickeln. Die zwei Roboterarme 13 sind einander gegenüberliegend angeordnet, so dass sich das Drehgestell 17 zwischen diesen befindet. Die Steuereinheit 14 ist dazu eingerichtet, die beiden Roboterarme 13 zur inversen Ablage jeweils zumindest eines Faserstranges 12 auf dem zwischen den Roboterarmen 13 auf der Drehachse 16 angeordneten Faserträger 11 anzusteuern. Unter inverser Ablage auf dem Faserträger 11 wird eine gleichzeitige spiegelbildliche bzw. gegensinnige Ablage eines jeweiligen Faserstranges 12 auf dem einen auf der Drehachse 16 angeordneten Faserträger 11 bezüglich seiner Symmetrieachse verstanden. So wird im dargestellten Ausführungsbeispiel der Faserträger 11 für ein als Vierpunktlenker ausgeführtes Bauteil 1 umwickelt. Dabei werden beispielsweise jeweils zwei einander gegenüberliegende Lasteinleitungsbereiche 4 gleichzeitig umwickelt. Entsprechendes gilt auch für den Körper 2 des Bauteils 1. Diese Ausführungsform lässt sich ebenfalls weiterbilden, indem an den Köpfen 25 der Roboterarme 13 jeweils eine Aufnahmeeinheit 26 zur Aufnahme von zwei oder mehr Spulen 18 angeordnet wird. Die Ablage der zwei oder mehr Faserstränge 12 durch den jeweiligen Roboterarm 13 erfolgt dabei jeweils parallelisiert, wie es bespielhaft anhand der Ausführungsform gemäß Fig. 7 beschreiben wurde.

### Bezugszeichen

- 1: Bauteil
- 2: Körper
- 3: Verbindungsstruktur
- 4: Lasteinleitungsbereich

- 10: Vorrichtung
- 11: Faserträger
- 12: Faserstrang
- 13: Roboterarm
- 14: Steuereinheit
- 15: Bussystem
- 16: Drehachse
- 17: Drehgestell
- 18: Spule
- 19: Einrichtung zur Aufrechterhaltung der Faserstrangspannung
- 20: Synchronmotor
- 21: Recheneinheit
- 22: Sensoreinheit
- 23: Achse
- 24: Fadenauge
- 25: Kopf von 13
- 26: Aufnahmeeinheit

## Patentansprüche

1. Vorrichtung (10) zur Fertigung von faserverstärkten Bauteilen (1) nach einem dreidimensionalen Wickelverfahren, umfassend zumindest eine rechnergesteuerte Wickelmaschine zur Umwicklung zumindest eines auf einer Drehachse (16) angeordneten Faserträgers (11) mit auf zumindest einer Spule (18) bereitgestellten fadenförmigen Endlosfasersträngen (12) mit zumindest einem Wickelmuster, **dadurch gekennzeichnet, dass** die zumindest eine Wickelmaschine als ein sechs Rotationsachsen aufweisender Roboterarm (13) ausgeführt ist, der zumindest zwei Faserstränge (12) gleichzeitig ablegt, wobei der zumindest eine Roboterarm (13) zur gleichzeitigen Ablage der zumindest zwei Faserstränge (12) verteilt auf mindestens zwei auf jeweils einer separaten Drehachse (16) angeordneten Faserträger (11) eingerichtet ist.

2. Vorrichtung (10) nach Anspruch 1, **dadurch gekennzeichnet, dass** die Vorrichtung (10) zumindest eine Einrichtung (19) zur Aufrechterhaltung einer vorgebbaren Faserstrangspannung unabhängig von der Zuführrichtung des jeweiligen Faserstranges (12) zwischen Spule (18) und Faserträger (11) aufweist.

3. Vorrichtung (10) nach Anspruch 2, **dadurch gekennzeichnet, dass** die zumindest eine Einrichtung (19) zumindest einen elektronisch geregelten Synchronmotor (20) umfasst, welcher die Spule (18) antreibt.

4. Vorrichtung (10) nach Anspruch 2 oder 3, **dadurch gekennzeichnet, dass** die zumindest eine Einrichtung (19) zumindest eine Sensoreinheit (22) zur Detektion der Faserstrangspannung und zumindest eine Recheneinheit (21) zur Ansteuerung des zumindest einen Synchronmotors (20) in Abhängigkeit von der detektierten Faserstrangspannung umfasst.

5. Vorrichtung (10) nach einem der Ansprüche 2 bis 4, **dadurch gekennzeichnet, dass** die zumindest eine Einrichtung (19) zur Aufrechterhaltung der Faserstrangspannung mit einer Aufnahmeeinheit (26) zur Aufnahme zumindest einer Spule (18) verbunden ist.

6. Vorrichtung (10) nach einem der Ansprüche 1 bis 5, **dadurch gekennzeichnet, dass** die zumindest eine Spule (18) beabstandet zu dem zumindest einen Roboterarm (13) angeordnet ist.

7. Vorrichtung (10) nach einem der Ansprüche 1 bis 5, **dadurch gekennzeichnet, dass** die zumindest eine Spule (18) an dem zumindest einen Roboterarm (13) angeordnet ist.

8. Vorrichtung (10) nach einem der Ansprüche 1 bis 6, **dadurch gekennzeichnet, dass** die Drehachse (16), auf welcher der Faserträger (11) angeordnet ist, an dem Roboterarm (13) angeordnet ist.

9. Vorrichtung (10) nach einem der Ansprüche 1 bis 8, **dadurch gekennzeichnet, dass** zur im Wesentlichen reibungsfreien Zuführung des jeweiligen Faserstranges zumindest ein Fadenauge (24) an dem zumindest einen Roboterarm (13) angeordnet ist.

10. Vorrichtung (10) nach einem der Ansprüche 1 bis 9, **dadurch gekennzeichnet, dass** zumindest zwei Faserträger (11) auf separaten Drehachsen (16) im Wesentlichen parallel zueinander angeordnet sind.

11. Vorrichtung (10) nach einem der Ansprüche 1 bis 10, **dadurch gekennzeichnet, dass** zwei Roboterarme (13) einander gegenüberliegend angeordnet sind, die zur inversen Ablage jeweils zumindest eines Faserstranges (12) auf einem zwischen den Roboterarmen (13) auf einer Drehachse (16) angeordneten Faserträger (11) eingerichtet sind.

12. Vorrichtung (10) nach Anspruch 11, **dadurch gekennzeichnet, dass** zwei Faserträger (11) auf einer gemeinsamen Drehachse (16) nebeneinander angeordnet sind.

13. Verfahren zum Erzeugen von Wickelmustern auf einem Faserträger (11) mit einer Vorrichtung (10) nach einem der Ansprüche 1 bis 12, **dadurch gekennzeichnet, dass** mit der Vorrichtung (10) ein geradzahliges Vielfaches parallelisierter Faserstränge (12), mindestens jedoch zwei Faserstränge (12), auf zumindest einen Faserträger (11) aufgewickelt werden.

14. Verfahren nach Anspruch 13, **dadurch gekennzeichnet, dass** eine vorgebbare Faserstrangspannung während des Wickelprozesses unabhängig von der Faserzuführrichtung eines Faserstranges (12) zwischen Spule (18) und Faserträger (11) aufrechterhalten wird.

15. Verfahren nach Anspruch 13 oder 14, **dadurch gekennzeichnet, dass** zwei Rotationsachsen des zumindest einen mehrere Rotationsachsen aufweisenden Roboterarms (13) bei einer parallelisierten Ablage von Fasersträngen (12) verteilt auf parallel zueinander angeordneten Faserträgern (11) derart angesteuert werden, dass diese während des gesamten Wickelprozesses mit einem konstanten Winkel betrieben werden.

## Claims

1. Device (10) for producing fibre-reinforced components (1) by a three-dimensional winding method, comprising at least one computer-controlled winding machine for wrapping at least one fibre carrier (11), disposed on a rotating axle (16), with thread-shaped continuous fibre strands (12) which are provided on at least one package (18) and have at least one winding pattern, **characterized in that** the at least one winding machine is embodied as a robotic arm (13) which has six rotation axes and deposits at least two fibre strands (12) simultaneously, wherein the at least one robotic arm (13) is specified for simultaneously depositing the at least two fibre strands (12) so as to be distributed on at least two fibre carriers (11) which are in each case disposed on a separate rotating axle (16).

2. Device (10) according to Claim 1, **characterized in that** the device (10) has at least one installation (19) for maintaining a definable fibre strand tension independently of the feeding direction of the respective fibre strand (12) between the package (18) and the fibre carrier (11).

3. Device (10) according to Claim 2, **characterized in that** the at least one installation (19) comprises at least one electronically feedback-controlled synchronous motor (20) which drives the package (18) .

4. Device (10) according to Claim 2 or 3, **characterized in that** the at least one installation (19) comprises at least one sensor unit (22) for detecting the fibre strand tension, and at least one computer unit (21) for actuating the at least one synchronous motor (20) as a function of the detected fibre strand tension.

5. Device (10) according to one of Claims 2 to 4, **characterized in that** the at least one installation (19) for maintaining the fibre strand tension is connected to a receptacle unit (26) for receiving at least one package (18).

6. Device (10) according to one of Claims 1 to 5, **characterized in that** the at least one package (18) is disposed so as to be spaced apart from the at least one robotic arm (13).

7. Device (10) according to one of Claims 1 to 5, **characterized in that** the at least one package (18) is disposed on the at least one robotic arm (13).

8. Device (10) according to one of Claims 1 to 6, **characterized in that** the rotating axle (16) on which the fibre carrier (11) is disposed is disposed on the robotic arm (13).

9. Device (10) according to one of Claims 1 to 8, **characterized in that**, for feeding the respective fibre strand substantially without friction, at least one thread eyelet (24) is disposed on the at least one robotic arm (13).

10. Device (10) according to one of Claims 1 to 9, **characterized in that** at least two fibre carriers (11) are disposed substantially parallel to one another on separate rotating axles (16).

11. Device (10) according to one of Claims 1 to 10, **characterized in that** two robotic arms (13) are disposed opposite one another, which are specified to inversely deposit in each case at least one fibre strand (12) on a fibre carrier (11) disposed on a rotating axle (16) between the robotic arms (13).

12. Device (10) according to Claim 11, **characterized in that** two fibre carriers (11) are disposed next to one another on a common rotating axle (16).

13. Method for generating winding patterns on a fibre carrier (11), using a device (10) according to one of Claims 1 to 12, **characterized in that** an even-numbered multiple of parallelized fibre strands (12), but at least two fibre strands (12), are wound onto at least one fibre carrier (11) by the device (10) .

14. Method according to Claim 13, **characterized in that** a definable fibre strand tension is maintained during the winding process, independently of the fibre feeding direction of a fibre strand (12) between the package (18) and the fibre carrier (11).

15. Method according to Claim 13 or 14, **characterized in that** two rotation axes of the at least one robotic arm (13) having multiple rotation axes, when depositing fibre strands (12) in a parallelized manner so as to be distributed on fibre carriers (11) disposed parallel to one another, are actuated in such a manner that said rotation axes are operated at a constant angle during the entire winding process.

## Revendications

1. Dispositif (10) de fabrication de composants (1) renforcés par des fibres selon un procédé de bobinage tridimensionnel, ledit dispositif comprenant au moins une machine de bobinage commandée par ordinateur et destinée à enrouler au moins un support de fibres (11) disposé sur un axe de rotation (16) et comprenant des brins de fibres sans fin filiformes (12) disposés sur au moins une bobine (18) et pourvus d'au moins un motif d'enroulement, **caractérisé en ce que** l'au moins une machine d'enroulement est conçue comme un bras de robot (13) qui comporte six axes de rotation et qui dépose au moins deux brins de fibres (12) en même temps, l'au moins un bras de robot (13) étant conçu pour déposer simultanément les au moins deux brins de fibres (12) de manière répartie sur au moins deux supports de fibres (11) disposés chacun sur un axe de rotation (16) distinct.

2. Dispositif (10) selon la revendication 1, **caractérisé en ce que** le dispositif (10) comporte au moins un module (19) destiné à maintenir une tension de brin de fibre spécifiable indépendamment de la direction d'amenée du brin de fibre respectif (12) entre la bobine (18) et le support de fibre (11).

3. Dispositif (10) selon la revendication 2, **caractérisé en ce que** l'au moins un module (19) comprend au moins un moteur synchrone (20) à régulation électronique qui entraîne la bobine (18).

4. Dispositif (10) selon la revendication 2 ou 3, **caractérisé en ce que** l'au moins un module (19) comporte au moins une unité de détection (22) destinée à détecter la tension du brin de fibres et au moins une unité de calcul (21) destinée à commander l'au moins un moteur synchrone (20) en fonction de la tension détectée du brin de fibres.

5. Dispositif (10) selon l'une des revendications 2 à 4, **caractérisé en ce que** l'au moins un module (19) destiné au maintien de la tension du brin de fibres est relié à une unité de réception (26) destinée à recevoir au moins une bobine (18).

6. Dispositif (10) selon l'une des revendications 1 à 5, **caractérisé en ce que** l'au moins une bobine (18) est disposée à distance de l'au moins un bras de robot (13).

7. Dispositif (10) selon l'une des revendications 1 à 5, **caractérisé en ce que** l'au moins une bobine (18) est disposée sur l'au moins un bras de robot (13).

8. Dispositif (10) selon l'une des revendications 1 à 6, **caractérisé en ce que** l'axe de rotation (16), sur lequel est disposé le support de fibres (11), est disposé sur le bras de robot (13).

9. Dispositif (10) selon l'une des revendications 1 à 8, **caractérisé en ce qu'**au moins un œillet de fil (24) est disposé sur au moins un bras de robot (13) afin d'amener sensiblement sans frottement le brin de fibre respectif.

10. Dispositif (10) selon l'une des revendications 1 à 9, **caractérisé en ce qu'**au moins deux supports de fibres (11) sont disposés sensiblement parallèlement l'un à l'autre sur des axes de rotation (16) séparés.

11. Dispositif (10) selon l'une des revendications 1 à 10, **caractérisé en ce que** deux bras de robot (13) sont disposés en étant opposés l'un à l'autre, lesquels sont conçus pour déposer de manière inversée au moins un brin de fibres (12) sur un support de fibres (11) disposé sur axe de rotation (16) entre les bras de robot (13).

12. Dispositif (10) selon la revendication 11, **caractérisé en ce que** deux supports de fibres (11) sont disposés l'un à côté de l'autre sur un axe de rotation commun (16).

13. Procédé de génération de motifs d'enroulement sur un support de fibres (11) à l'aide d'un dispositif (10) selon l'une des revendications 1 à 12, **caractérisé en ce que** le dispositif (10) permet d'enrouler un grand nombre pair de brins de fibres (12) mis en parallèle, mais au moins deux brins de fibres (12) sont enroulés sur au moins un support de fibres (11).

14. Procédé selon la revendication 13, **caractérisé en ce qu'**une tension spécifiable du brin de fibres est maintenue pendant le processus d'enroulement, indépendamment de la direction d'amenée des fibres d'un brin de fibres (12) entre la bobine (18) et le support de fibre (11).

15. Procédé selon la revendication 13 ou 14, **caractérisé en ce que**, lorsque des brins de fibres (12) sont déposés en parallèle de manière répartie sur des supports de fibres (11) disposés parallèlement les uns aux autres, deux axes de rotation de l'au moins un bras de robot (13), qui comporte plusieurs axes de rotation sont commandés de manière à pouvoir fonctionner avec un angle constant pendant tout le processus de bobinage.
